# EUROPEAN PATENT APPLICATION

(11) **EP 2 007 055 A2**
(43) Date of publication of application: **24.12.2008**
(21) Application number: 07720516.9
(22) Date of filing: 23.03.2007
(51) Int. Cl.: H04L 1/08

(54) **MESSAGE RELIABLE INFORMING METHOD AND APPARATUS BETWEEN SYSTEMS**

(30) Priority: 27.03.2006 CN 200610067456
(71) Applicant: Alibaba Group Holding Limited, Grand Cayman (KY)
(72) Inventor: QIAN, Zhilong, Hangzhou Zhejiang 310099 (CN); CHENG, Li, Zhejiang 310099 (CN); LI, Lei, Zhejiang 310099 (CN)
(74) Representative: Grünecker, Kinkeldey, Stockmair & Schwanhäusser Anwaltssozietät
(86) International application number: PCT/CN2007/000942
(87) International publication number: WO 2007/109986

(57) **Abstract**

The present invention discloses a method and system for reliable intersystem message notification which can ensure reliable delivery of notification messages. The method includes the following steps: storing notification messages persistently; sending a new stored notification message or a retry notification message; and resending the notification message if the notification message has not been successfully sent. The described method and system support many transmission protocols between different systems. The receiving party can reliably receive notification messages without a need to implement complicated interaction protocols. This invention therefore is suitable for widespread use in the Internet. Moreover, the method and system support multiple transaction processing, can be used as a common business transaction application platform, and at the same time allows flexible expansion of multiple transactions and multiple protocols.

## Description

This application claims priority from Chinese patent application, Application No. 200610067456.5, filed March 27, 2006, entitled "METHOD AND SYSTEM FOR RELIABLE INTERSYSTEM MESSAGE NOTIFICATION", and incorporates the Chinese patent application in its entirety by reference.

### TECHNICAL FIELD

The present invention relates to the fields of data transmission, and particularly to methods and systems for reliable intersystem message notification.

### BACKGROUND ART

Along with the rapid development of the Internet technologies, an increasing number of Internet application systems use message notification as their mode of interaction. One typical application of current message notification is message notification between online banks and merchants. In one application scenario, when a user submits a transaction order from a merchant website to an online bank and after an actual payment is completed by the user, the online bank will inform the merchant a result of successful payment in the form of a message notification. The merchant then completes remaining transactions such as delivery of goods to the user. Whether the message notification of the payment result is reliably arrived to the merchant will directly affect the transaction flow of the user. Therefore, the reliability of the arrival of this message notification is very critical.

However, Internet is unreliable. Its unreliability is manifested in its unpredictability of network connectivity and time delays. This unreliability is also manifested in the unpredictability of the availability of hardware and software that are connected over the Internet. Therefore, there exists a certain loss rate for the Internet-based message notifications. However, electronic commerce requires very reliable message flow. Losing critical message notifications would not only hinder the smooth process of business activities, but can even bring a financial loss to the parties involved in the business activities. From a practical point of view of the current situations, there is still no reliable delivery of intersystem message notification of the banks and the merchants. According to the statistics done by iResearch in 2005, the message loss rate is quite high for most of the third-party payment platforms in China. Specifically, many results of successful user payment made through online banks fail to be timely notified to the third-party payment platforms, among which the order loss rate of online payment platforms is as high as 20%.

WS-Reliable Messaging (Web Service Reliable Messaging Protocol) and WS-Reliability (Web Service Reliability) are two reliable messaging protocols for Web Service. WS-Reliable Messaging is a protocol proposed by companies such as IBM, BEA, Microsoft and TIBCO to perform reliable message transmission in a distributed system. WS-Reliability, on the other hand, is proposed by Web-Service Reliable Messaging (WSRM) Technical Committee of OASIS. WS-Reliability is a SOAP-based protocol for exchanging SOAP (Simple Object Access Protocol) messages with guaranteed delivery and no duplicates. Essentially, these two protocols are both based on message ordering and employ Sliding Window Protocol to validate the messages to achieve reliable message transmission.

HTTPLR Protocol is proposed by Propylon Ltd. of Ireland in 2005 and is an application protocol built on HTTP protocol for providing a message transmission service of guaranteed transmission and single-transmission of messages for HTTP protocol. HTTPLR provides a reliable message transmission mechanism for message upstream (from client to server) and message downstream (from server to client). However, this mechanism does not involve the availability of the message sending end and the message receiving end, the robustness of the components, the persistent storage of the messages, and retry and timeout of the messages. The mechanism only involves how both parties of the message exchange achieve a consistent understanding of whether the message is successfully delivered.

In practical terms, none of WS-Reliable Messaging, WS-Reliability and HTTPLR protocols has received widespread use in the Internet. The main reasons are as follows. First, these protocols are still immature, and some are even in drafting stage only. Second, even though the mechanisms of reliable message transmission are theoretically described, these protocols do not describe how to achieve these mechanisms in practice. Third, these protocols have limited application environments. For example, HTTPLR is used on top of HTTP protocol, while WS-Reliable Messaging and WS-Reliability protocols are used for Web Services. Fourth, these protocols have relatively complicated implementation requirements for clients and servers. For instance, systems on both communication ends need to support the same reliable message transmission mechanism. In the current Internet environment, it is normally very difficult to require both parties of message exchanging to have the same complicated protocol.

### DESCRIPTION OF THE INVENTION

The present invention provides a method and system of reliable intersystem message notification suited between any cooperating systems. The method and the system are particularly useful in solving the problem of irreparable loss of the messages due to instabilities of the network, servers and software systems when an opposite end does not support any reliable messaging transmission protocol.

This invention provides a method of reliable intersystem message notification. The method includes the following steps:
storing a notification message;
sending the stored notification message; and
resending the notification message if the sending of the notification message fails.

Optimally, the notification message is a message that needs to be sent to an opposite end by a business application. A failure of sending the notification message includes such situations as no return message being received from the opposite end or no message of a successful business transaction being received from the opposite end.

Optimally, prior to sending the stored notification message, the method further includes: determining whether a business transaction associated with the notification message has been completed; and triggering the sending of the notification message if the business transaction is completed, or waiting until the business transaction is completed to trigger the sending of the notification message.

Optimally, the business transaction is a payment made by a user through an online bank. The notification message is a payment result of the user. The successful completion of the business transaction at the opposite end is indicated by a message that includes delivery information of a merchant.

Optimally, sending the stored notification message includes: determining an address and a transmission protocol of the opposite end according to a transaction type of the notification message; and sending the notification message to the address using the transmission protocol.

Optimally, before resending the notification message, the method also includes: determining a time interval for resending the notification message and computing a retry time according to the time interval. The resending of the notification message is performed when the retry time is reached.

Optimally, the step of resending notification message includes: identifying, at preset periods, notification messages that are due for retry; and resending the notification messages identified.

Optimally, the retry time interval increases as the number of resending increases.

Optimally, the method also includes deleting the stored notification message if the corresponding message notification is successful.

The present invention also provides a system of intersystem message notification. The system includes: a database, used for storing notification messages; a notifying client, used for saving the notification messages into the database and triggering sending the notification message; and a notifying server, used for sending the notification message, and for re-sending the notification message if the notification message has failed to be delivered.

Optimally, the notification message is a message needed to inform an opposite end by a business application and is sent from the business application to the notifying client. The failure of sending-the notification message includes a situation where no message is received from the opposite end or where no message indicating a successful business transaction is received from the opposite end.

Optimally, the system further includes a transaction synchronizer in the notifying client, and the transaction synchronizer is used for triggering the sending of the notification message after the business transaction associated with the notification message is completed.

Optimally, the notifying server includes: a notification executing unit, used for sending the notification message and setting up a retry time for the notification message in the database if the notification message has failed to be sent; and a notification recovering unit, used for identifying any notification messages having a due retry time and triggering the notification executing unit to resend the identified notification messages.

Optimally, the notification recovering unit runs at set times.

Optimally, the system also includes a message queue. Through the message queue, the notifying client triggers the notification executing unit to instantly resend the notification message.

Optimally, the system also includes at least one business transaction plug-in corresponding to each transaction type. The business transaction plug-in is used to provide an address and a protocol of the opposite end of the corresponding transaction type to the notification executing unit. The business transaction plug-in also determines whether the business transaction is successful based on a message received from the opposite end.

Optimally, the notifying server also includes at least one protocol adaptor corresponding to each transmission protocol. The protocol adaptor is used to transmit the notification message from the notifying server using the corresponding transmission protocol.

Optimally, the retry time interval between the retry times increases as the number of retries increases.

The present invention is useful between any cooperating systems. By storing the notification message and resending the notification message to the opposite end if the notification fails, this invention releases the opposite end of message notification from depending on a particular reliable messaging transmission protocol. Instead, in order to reliably receive a notification message, the opposite end only needs to return a processing result of the message according to a business transaction requirement. Since the notification message is persistently stored until the message is successfully sent, this invention can prevent the loss of the notification message caused by failures of network and hardware or software of the opposite end, thus ensuring reliable delivery of the notification message.

Furthermore, this invention triggers the process of sending a notification message after completion of the business transaction and determines if resending the notification message is needed based on the result of the business transaction of the opposite end. This not only provides reliable message notification when failures have occurred in the transmission layer or layers below, but also provides reliable message notification even when an error happened in the business transaction processing of the application layer. As such, consistency between business transaction processing and message notification is achieved.

Moreover, targeting the pattern of short term and mid-long term communication failures over the Internet, the method and system of this invention provide a practical and efficient way of handling timeout and message resending. As the number of retries increases, the interval between retry times increases. The change in the retry time interval gives a balanced consideration of timeliness and efficiency of notification recovery at the same time. For short term communication failures, the invention can timely send a message notification to an opposite end after the failure is fixed; while in the event of a mid-long term failure the cost of making too many unnecessary retries may be avoided.

Moreover, by extending the protocol adaptor, the current invention can be used with different messaging transmission protocols to satisfy the broad needs of the Internet.

The method and system of this invention can further be used as a universal platform which supports operations of different business applications through expanding business transaction plug-ins, to allow flexible development of new business.

### DESCRIPTION OF DRAWINGS

The present invention will be described in further details using the following figures and exemplary embodiments.

FIG. 1 shows a schematic diagram of an apparatus and a system for reliable intersystem message notification in accordance with the present invention.

FIG. 2 shows a flow chart of a method of reliable intersystem message notification in accordance with the present invention.

FIG. 3 shows a flow chart of a registering process in the disclosed message notification method.

FIG. 4 shows a flow chart of sending a notification message in accordance with the disclosed message notification method.

FIG. 5 shows a flow chart of recovering a message notification in accordance with the disclosed message notification method.

FIG. 6 shows a conceptual diagram of a method for determining retry intervals for sending a notification message in accordance with the present invention.

### EXEMPLARY EMBODIMENTS

As electronic commerce based on the Internet has occupied a more and more important position in the today's society, an increasing number of business entities organize information flow, fund flow and logistics over the Internet. The number of Internet application systems using message notifications as the interaction mode is on the rise. One example is banking. After a user completes a payment with a bank, the bank needs to inform a merchant system using a notification message about the status of the user payment. Another example is third-party secure transaction platform. After a user has advanced a business transaction on the transaction platform, the transaction platform needs to inform a related external merchant system the current status of the business transaction. These are typical examples of Intemet-based message notifications. The present invention is suitable for use between any cooperating systems and particularly suitable for the popular Internet.

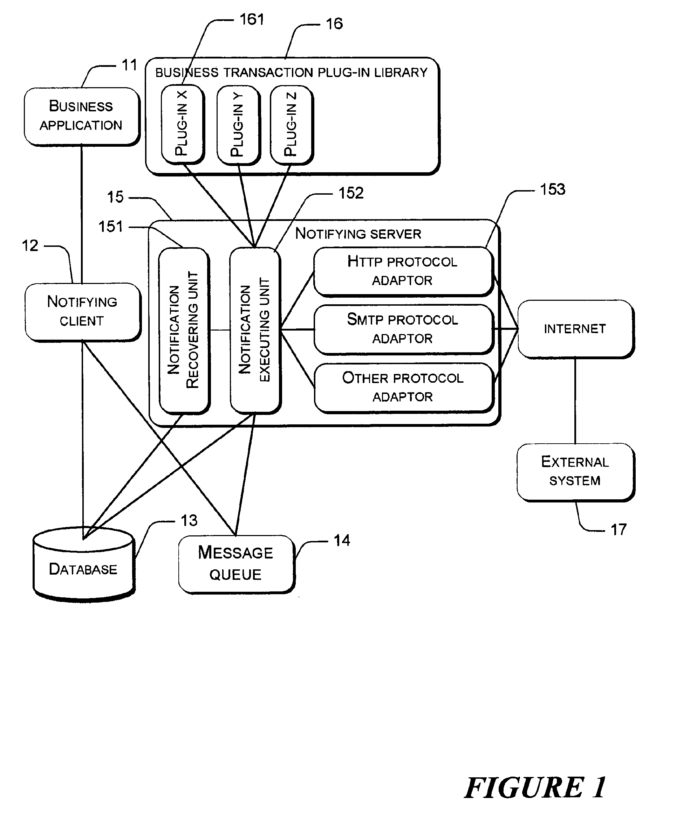

FIG. 1 shows a schematic diagram of an apparatus and a system for reliable intersystem message notification in accordance with the present invention. A business application 11 can be any merchant application and is an initiator of the process of message notification. An external system 17 can be any merchant system and plays the role of receiving party of notification message. The notification system in this invention is used to deliver a notification message received from the business application 11 and to ensure reliable delivery of the notification message to the external system 17 through the Internet. The notification system may include:

A database 13, used for storing notification messages to be sent. The notification messages to be sent include the new notification messages which have not been sent and the notification messages which are waiting to be resent.

A notifying client 12, used for saving notification messages into the database and triggering, through a message queue 14, an immediate delivery of a notification message.

A notification executing unit 152, used for sending new notification messages or notification messages that need to be resent. If the delivery of a notification message is successful, the notification executing unit 152 will delete this notification message from the database 13. Otherwise, the notification executing unit 152 will set up a retry time for the notification message and update a corresponding parameter of the notification message in the database 13 (e.g., update the retry time of the notification message in the database 13).

A notification recovering unit 151, used for checking whether the retry time of any notification messages waiting to be resent is due. If the retry time of any notification message is due, the notification recovering unit 151 notifies the notification executing unit 152.

As shown in the figure, the database 13 can be any commonly used relational database and is used for storing new notification messages that are waiting for delivery and the notification messages which have failed to be delivered previously and are now waiting to be resent. The notifying client 12 can be a client module used by the business application 11 and may be embedded in the business application system. The business application 11 can use the notifying client 12 to register a notification message. Once the registration of the notification message is successful, the notification system can ensure that the notification message is delivered to the receiving party of the message even if the message receiving party is offline or the network is temporarily disconnected. The registration process of notification message can have the notifying client 12 store a notification message received from the business application 11 into the database 13 and trigger an immediate delivery of the notification message through the message queue 14. The business application system refers to a system that processes relevant transactions in connection with the business application 11. Illustrated using message notification between an online bank and a merchant as an example, the business transaction associated with the notification message refers to a user making an actual payment with the online bank. If the payment is complete, the business transaction is submitted in completion. Otherwise, the business transaction is still in progress. The notification message refers to a result of the user payment indicating whether the payment is complete or not. Transaction is a technical term and represents a group of operations having ACID characteristics. When a transaction is created, it is desired to ensure that the transaction has some self-managing characteristics. These characteristics are called ACID. ACID stands for Atomicity, Consistency, Isolation and Durability. The ACID characteristics of a transaction are critical elements for achieving a 100% consistency between message notification and business operation.

Embedding notifying client 12 into the business application system allows the completion of business transaction processing and registration of notification message in the same database transaction, and therefore can completely avoid the inconsistency between business transaction processing and message notification. Here, consistency means that the notification message can be successfully registered and sent immediately only after the corresponding business transaction is completed. The database used in the database transaction can be the system's database that stores the notification messages. Normally, this database is the same database in the business application system for storing the business transaction data. Using the same database allows the implementation of registration of notification message and processing of business transaction data in the same database transaction without using a complicated distributed transaction mechanism with low efficient. However, the consistency between registration of notification message and processing of business transaction data can be maintained through a distributed transaction mechanism using different databases.

The message queue 14 is a standard middleware for asynchronous information communication between systems. Using message queue 14, the processes of sending and receiving messages can be asynchronous, while the sender and the receiving party of the message are allowed to communicate indirectly through the message queue 14. This minimizes the mutual dependence between the sender and the receiving party of the message and therefore allows both parties to perform their respective tasks relatively independently. The message queue can generally send the message to the receiving party immediately upon receiving the message, as long as the receiving party of the message is in normal operation. In this exemplary embodiment, the message queue 14 is used to trigger an immediate delivery of the notification message.

Notifying server 15 can be a server or a group of individual servers that are responsible for sending and resending notification messages. The notifying server 15 may include a notification recovering unit 151, a notification executing unit 152 and various protocol adaptors 153. The notification recovering unit 151 is a module responsible for scheduling to resend at set times the notification messages which experienced unsuccessful deliveries. The notification executing unit 152 is a module that executes the actual delivery of the notification messages. Each protocol adaptor of the various protocol adaptors 153 supports a transmission protocol and completes the actual data transmission with the external system 17 through the Internet. A business transaction plug-in library 16 includes different business transaction plug-ins 161. The business transaction plug-ins 161 correspond to different transaction types and are responsible for the pre-processing before the delivery of notification messages and the processing of the returned result messages. The pre-processing and the return processing are closely related with the business applications. Different business applications will have different handling processes.

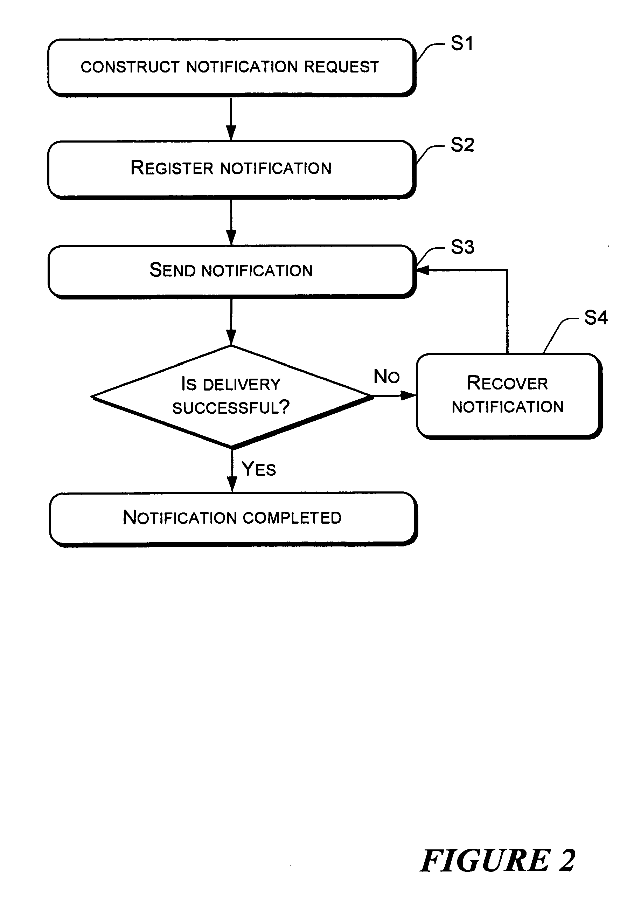

FIG. 2 shows a flow chart of a method of reliable intersystem message notification in accordance with the present invention. When a business application needs to send a notification message to an external system, reliable delivery of the notification message can be achieved by performing the following steps:

At Step S1, a business application packages its notification needs into a message notification request and sends this request to a notifying client of the notification system.

At Step S2, the notifying client registers the notification message. Once registration of the notification message is done, the business application can continue to perform its other transactions. The notification system ensures the delivery of the notification message to a receiving party, even if the receiving party of the message is offline or temporarily disconnected at the time.

At Step S3, after the notification message is successfully registered, the notification system sends out the notification message. If the opposite end is successfully notified, the task of message notification is completed. Otherwise, the process will continue to Step S4. In this invention, a successful message notification includes a successful delivery of the message to the opposite end and receiving from the opposite end a message of a successful business transaction.

Step S4 performs a recovery of message delivery and schedules to resend at a proper time the notification messages which have had unsuccessful deliveries. The process then returns to Step S3.

In this process, Steps S4 can be executed at the same time with Steps S1, S2 or S3. In the following, Steps S2, S3 and S4 are individually described in further details.

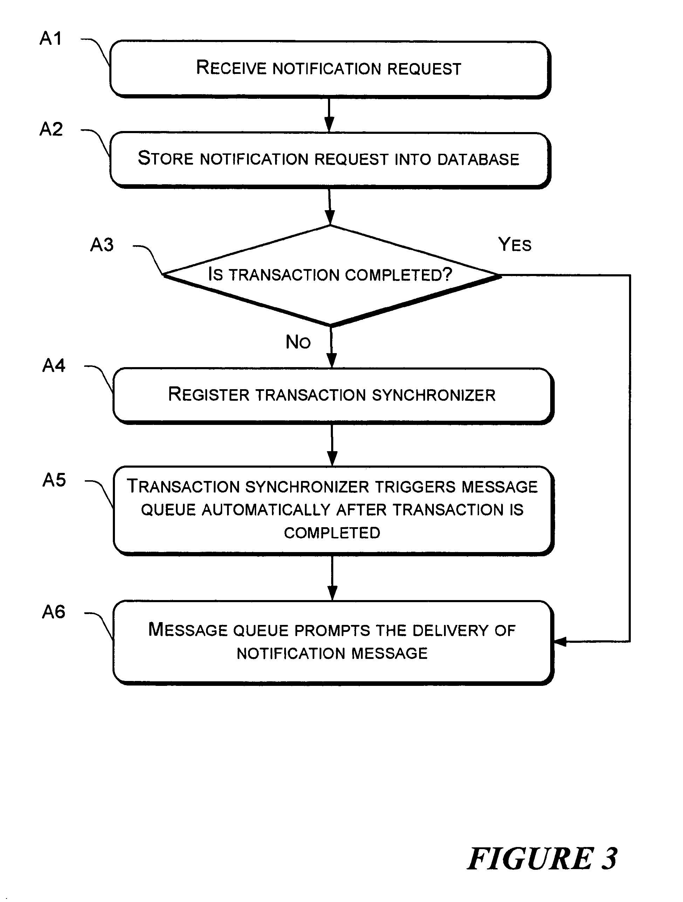

FIG. 3 shows a flow chart of a registering process in the disclosed message notification method. The registration includes the following steps:

At Step A1, a notifying client receives a message notification request from a business application. The message notification request may include the content of the notification message.

At Step A2, the notifying client stores the message notification request into a database until the associated notification message is successfully sent. This can avoid the irreparable loss of the notification message due to instability of the network, the server or the software system.

At Step A3, the notifying client determines whether the business transaction associated with the notification message has been completed. If the business transaction is still in progress, the process continues to Steps A4, A5 and A6. If the business transaction is completed, the notifying client will automatically trigger a message queue and the process will directly proceed to Step A6. Take a message notification between an online bank and a merchant as an example, the business transaction associated with the notification message can be a user making a payment using the online bank. If the payment is successfully made, the business transaction is completed. Otherwise, the business transaction is still in progress. The notification message can include a result of the user payment indicating whether the payment has been completed. In the current exemplary embodiment, since the notifying client is embedded in the business application system, it may register the message notification request into the database within the business transaction. This can achieve consistency between the business transaction processing and the registration of notification request without having to use complicated mechanisms.

At Step A4, the notifying client registers a transaction synchronizer in a transaction management unit. The transaction management unit refers to the software for managing transactions and may include transaction synchronizers. The transaction synchronizer being registered is set up in the notifying client and is used to send to the notifying server through the message queue a request for immediate delivery of the notification message after the associated transaction is submitted. This can ensure the timeliness of the notification.

At Step A5, after the transaction is completed, the transaction synchronizer triggers the message queue automatically.

At Step A6, the message queue sends to the notification executing unit a request for immediate delivery of the notification message, prompting the notifying server to perform delivery, thus ensuring the immediacy of the notification.

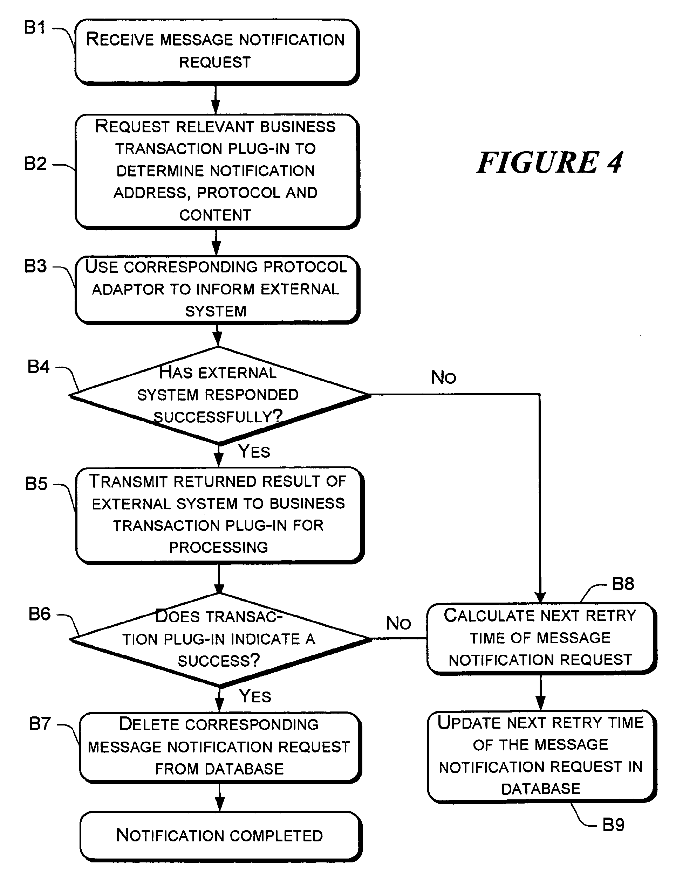

FIG. 4 shows a flow chart of a notification message delivery process. The delivery process includes the following steps:

At Step B1, a notification executing unit receives a new message notification request from a notifying client sent through a message queue, or a message notification retry request sent from a notification recovering unit. If the new message notification request from the message queue and the message notification retry request from the notification recovering unit are received at the same time, the notification executing unit preferably performs multithread processing and sends both the new notification message and the retrying notification message at the same time. Alternatively, the notification executing unit can send the notification messages separately based on priorities.

At Step B2, the notification executing unit selects a business transaction plug-in from a business transaction plug-in library according to the type of the message notification request, and sends the message notification request to the business transaction plug-in for pre-processing to obtain actual notification address, notification protocol and notification parameters of an external system.

At Step B3, the notification executing unit selects a suitable protocol adaptor based on the notification protocol and provides the content of notification message, the notification address and the notification parameters, to the protocol adaptor for actual message delivery.

At Step B4, if the network, server and systems of both parties are in normal operation, the message is sent to the external system through the Internet. Upon receiving and processing the message, the external system returns a processing result. Otherwise, the notification executing unit can automatically detect that the notification message did not reach the external system, and the process will go to Steps B8 and B9.

At Step B5, the notification executing unit sends the returned result to the business transaction plug-in and let the business transaction plug-in complete the corresponding business transaction processing. In the above example, upon receiving the returned result of the external system, the business transaction plug-in may need to update the status of the trade to "item shipped", record the details of the invoice and notify the user about the shipping status. Since the notifying server is shared for common use and not related to any particular type of business transactions, the above processing is carried out by a suitable business transaction plug-in.

At Step B6, the business transaction plug-in determines whether a retry for message delivery is needed. The business transaction plug-in makes the decision based on whether there is a returned result and whether the format and the content of the returned result are valid. Still using the above example for illustration, if the returned result has valid shipping information of the merchant, the business transaction plug-in will consider the message notification to be successful. If no returned result is received or the returned result has invalid format, or if the merchant indicates explicitly in the returned result that it is temporarily unable to process and needs a certain period of time for retry, the business transaction plug-in will then consider this message notification to be unsuccessful and need a retry.

Since a failure of message notification may not only be caused by failures of the network or systems but may also depend on whether the business transaction itself is successful, the determination responsibility is taken by a business transaction plug-in. This is because the general-purpose notifying server can only determine whether there are failures in the network and systems, but cannot decide whether the business transaction itself is successful. Nevertheless, since obvious failures in the network and systems can be determined by the notifying server, under such circumstances the notifying server may directly decide whether a retry is needed.

At Step B7, if the business transaction plug-in determines that no retry is needed, the notifying server will delete the corresponding message notification request from the database and successfully complete the delivery of the notification message.

At Step B8, if the notification message cannot reach the external system due to various reasons such as network problems, or if the business transaction plug-in indicates that a retry for the message is needed, the notifying server will calculate the time interval for the next retry according to a retry strategy and set the time for the next retry to be the current time plus the calculated time interval.

At Step B9, for the notification messages waiting to be resent, the notifying server updates the sending times of corresponding message notification requests in the database according to the calculated retry times and waits for the notification recovering unit to perform a re-schedule.

By expanding business transaction plug-ins, the above process of sending notification messages can provide support to various types of transaction notifications using the same message notification system. By extending protocol processors/adaptors, support can also be provided for notifications of different protocols in the same message notification system. Moreover, a receiving party of the notification message has no need to implement any special secure messaging transmission protocol, but only needs to return a message processing result according to the business transaction requirement in order to reliably receive messages from the sender of message notification.

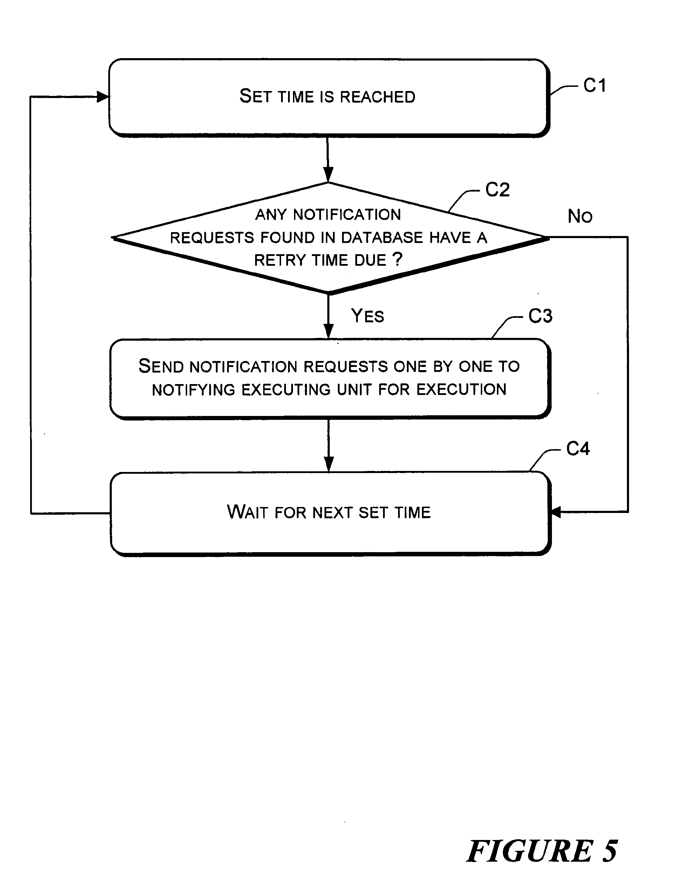

FIG. 5 shows a flow chart of recovering a message notification. The notification process enters into notification recovery when a notification message needs to be re-sent. Optimally, the notification recovering unit runs at set times. In each run, the following steps are executed:

At Step C1, a notification recovering unit waits for a set time and starts to operate when the time is reached.

At Step C2, the notification recovering unit finds in the database those message notification requests that have a due retry time. The notification recovering unit checks the message notification requests that need retries, and compares the retry times calculated in Step B8 with the set time of the current run. If any retry time is smaller than or equal to the set time, there exists a message notification request with a due retry time, and the notification process continues to Step C3. Otherwise, the current run of retry is abandoned, and the process goes to Step C4.

At Step C3, for those notification messages having a due retry time, the notification recovering unit sends a retry request to the notification executing unit and provides the notification messages one by one to the notification executing unit for delivery.

At Step C4, the notification recovering unit waits for the next set time for the next run.

Normally the set time interval for running the notification recovering process is fixed, once a minute, for example. The size of the interval between set times has an impact on the timeliness of notification recovery. Therefore it is desirable to set the time interval as smaller as possible, but this must be within the tolerance of the notifying server. It is noted that the set time interval is not the same as the retry interval for message notification. The retry time interval for message notification is individually calculated and set for each notification message through a retry interval determination method.

In Step B8 of the process of sending notification messages, the above-mentioned retry strategy can adopt a fixed retry time interval commonly used. Optimally, however, the present invention adopts a retry interval determination method described below for determining retry time interval. The retry interval determination method is designed for minimizing the number of retries while maximizing the timeliness of the delivery of notification messages to the message receiving party, by tailoring to the typical causes of message notification failure over the Internet.

There are several possible causes of the failure in intersystem message notification over the Internet: the network is temporarily busy and causes an overtime for transmission protocol; the network temporarily disconnects; the opposite server is temporarily busy and cannot respond to the request; the opposite end has a bug and hence cannot respond to the request or incorrectly processes the request; the opposite server hangs and therefore cannot respond to the request; a long-term failure in the network causes an outrage of hours or even days; a long-term failure in opposite end causes unavailability of hours or even days; and the opposite end does not exist or has been permanently shut down.

From the reasons observed above, the causes for a failure in message notification can disappear or be relieved in a few minutes, but can also last for hours and even days. Accordingly, a preferred retry strategy for message notification should aim to achieve the following: when the cause disappears or is relieved in a few minutes, message notification is timely sent to the opposite party; when the cause needs several hours or even several days to disappear, the system can still send the message notification to the opposite party, but without making too many unnecessary retries. Therefore, the present invention preferably adopts the following retry interval determination method to determine the retry time interval.

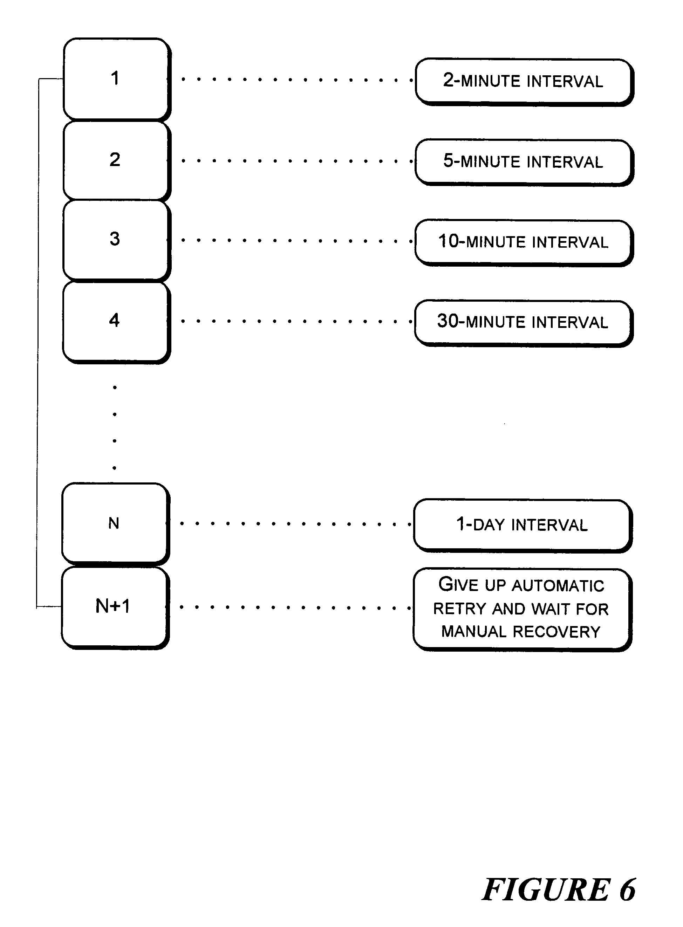

FIG. 6 shows a conceptual diagram of a method for determining retry intervals for sending a notification message. The retry interval determination method is described as follows.

Assume there are multiple boxes numbered from 1 to n+1, among which the boxes numbered 1 through n is each associated with a timer. Each timer has a set time which increases as the box's numbering increases. For example, the set time for box number 1 is two minutes, for box number 2 is five minutes, for box number 3 is ten minutes, and so forth. The box numbered n+1 has no timer, indicating that the message would never reach the message receiving party, and should give up auto-retry and wait for manual recovery.

In operation, after a message notification has failed for i number of times, it will be placed in box numbered i; after the set time of the timer for box numbered i is reached, all message notifications in this box will be triggered for retries; after a message notification has failed for n+1 times, it will be placed into the box numbered n+1. Since there is no timer for box numbered n+1, the system has given up automatic retry for this message notification and passes this message notification for manual processing.

The notification system in this invention can also adjust the timer on each box according to the characteristics of different types of external systems in order to conform to the failure pattern of the corresponding external system.

In the retry interval determination method as shown in FIG. 6, if the number of retries for message notifications is few, it indicates that the cause for the failure in sending notification messages has disappeared in a short time. Since the time interval between each retry is small in this case, this can ensure timely delivery of notification messages when the cause is fixed. However, if the number of retries for message notification is large, it indicates that there has been a long-term communication failure causing unsuccessful delivery of notification messages. As the subsequent retry time intervals become progressively longer, this will effectively avoid many unnecessary retries and reduce the occupancy of system resources while still ensuring the delivery of the notification message. Therefore, the described retry interval determination method can both ensure timely recovery of message notification in events of short-term communication failures and avoid many useless retries of notification during long-term communication failures. As such, the described retry interval determination method can achieve both the timeliness and the efficiency of notification recovery at the same time.

The method and system for reliable intersystem message notification in this invention are suitable for use between any cooperating systems. Especially when the message notification is performed between systems over the Internet, the present invention can solve the problem of irreparable loss of notification messages caused by unreliability of the network and failures in hardware and software, and ensure timely and reliable delivery of the message. This invention supports a variety of transmission protocols between different systems. The receiving party can reliably receive notification messages without the need of implementing complicated interaction protocols, making this invention suitable for widespread use in the Internet. The method and system also support multiple business transaction processing, serve as a universal business transaction application, and be flexibly expanded to multiple business transactions and protocols.

The method and system for reliable intersystem message notification in this invention are described in details above. Exemplary embodiments are employed to illustrate the concept of the present invention in this document. In particular, the method and system of this invention are suitable for use between any cooperating systems but not restricted to the use between Intemet-based systems. Even though the present invention can be optimized to ensure reliable intersystem message notification over the Internet and is particularly suitable for widespread use in the Internet, this preference should not be interpreted as a limitation to the claims of this invention. The exemplary embodiments are only used for better understanding of the method and core concepts of the present invention. Based on the concepts of this invention, a person of ordinary skills in art may make modifications to the practical implementation and application areas. In conclusion, the content of this description should not be interpreted as limitations to the present invention.

## Claims

1. A method of intersystem message notification, **characterized in that** the method comprises:
storing a notification message;
sending the stored notification message; and
resending the notification message if the sending of the notification message fails.

2. The method of intersystem message notification as recited in claim 1, **characterized in that** the notification message is to be sent to an opposite end by a business application, and a failure of sending the notification message includes no return message being received from the opposite end or no message of a successful transaction being received from the opposite end.

3. The method of intersystem message notification as recited in claim 2, **characterized in that**, prior to sending the stored notification message, the method further comprises:
determining whether a business transaction associated with the notification message has been completed; and
triggering the sending the notification message if the business transaction has been completed, or waiting until the business transaction is completed to trigger the sending of the notification message.

4. The method of intersystem message notification as recited in claim 3, **characterized in that** the business transaction is a payment made by a user through an online bank, the notification message comprises a result of the user payment, and completion of the business transaction at the opposite end is indicated by a message comprising delivery information of a merchant.

5. The method of intersystem message notification as recited in any one of claims 2-4, **characterized in that** sending the stored notification message comprises:
determining an address and a transmission protocol of the opposite end according to a transaction type of the notification message; and
sending the notification message to the address using the transmission protocol.

6. The method of intersystem message notification as recited in any one of claims 1-4, **characterized in that** prior to resending the notification message, the method further comprises:
determining a time interval for resending the notification message and computing a retry time according to the time interval, wherein resending the notification message is performed when the retry time is reached.

7. The method of intersystem message notification as recited in claim 6, **characterized in that** the resending notification message comprises:
periodically identifying notification messages that are due for retry; and
resending the identified notification messages.

8. The method of intersystem message notification as recited in claim 6, **characterized in that** the retry time interval increases as the number of retries performed increases.

9. The method of intersystem message notification as recited in any one of claims 1-4, **characterized in that** the method further comprises:
deleting the stored notification message if the notification message is successfully sent.

10. A system of intersystem message notification, **characterized in that** the system comprises:
a database, used for storing a notification message;
a notifying client, used for storing the notification message in the database and triggering the sending of the notification message; and
a notifying server, used for sending the notification message, and for resending the notification message if the sending the notification message fails.

11. The system of intersystem message notification as recited in claim 10, wherein the notification message is used to inform an opposite end by a business application and is sent from the business application to the notifying client, and wherein a failure of sending the notification message includes no return message being received from the opposite end or no message of a successful transaction being received from the opposite end.

12. The system of intersystem message notification as recited in claim 11, wherein the system further includes a transaction synchronizer in the notifying client, and the transaction synchronizer is used for triggering the sending of the notification message after a business transaction associated with the notification message is completed.

13. The system of intersystem message notification as recited in any one of claims 10-12, **characterized in that** the notifying server further comprises:
a notification executing unit, used for sending the notification message and setting up a retry time of the notification message in the database if the sending the message notification fails; and
a notification recovering unit, used for identifying a notification message having a due retry time, and triggering the notification executing unit to resend the identified notification message.

14. The system of intersystem message notification as recited in claim 13, **characterized in that** the notification recovering unit runs at set times.

15. The system of intersystem message notification as recited in claim 13, **characterized in that** the system also includes a message queue, and through the message queue, the notifying client triggers the notification executing unit to instantly resend the identified notification message.

16. The system of intersystem message notification as recited in claim 13, **characterized in that** the system further comprises:
at least one business transaction plug-in corresponding to a transaction type, the business transaction plug-in being used to provide an address and a protocol of the opposite end of the transaction type to the notification executing unit, and to determine whether a business transaction is successful based on a message received from the opposite end.

17. The system of intersystem message notification as recited in claim 13, **characterized in that** the notifying server further comprises:
at least one protocol adaptor corresponding to a transmission protocol, the protocol adapter being used to transmit the notification message from the notifying server using the transmission protocol.

18. The system of intersystem message notification as recited in claim 13, wherein the retry time has a retry interval which increases as the number of retries performed increases.
